(19) **Europäisches Patentamt / European Patent Office / Office européen des brevets**

(11) **EP 2 871 451 A1**

(12) **EUROPEAN PATENT APPLICATION**
published in accordance with Art. 153(4) EPC

(43) Date of publication:
**13.05.2015 Bulletin 2015/20**

(21) Application number: **13813547.0**

(22) Date of filing: **03.07.2013**

(51) Int Cl.:
*G01J 3/02* (2006.01)    *G01J 3/36* (2006.01)
*G01N 21/17* (2006.01)

(86) International application number:
**PCT/JP2013/068266**

(87) International publication number:
**WO 2014/007291 (09.01.2014 Gazette 2014/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.07.2012   JP 2012150594**

(71) Applicant: **Sumitomo Electric Industries, Ltd.**
**Osaka-shi, Osaka 541-0041 (JP)**

(72) Inventors:
• **TANAKA Masato**
  **Yokohama-shi**
  **Kanagawa 244-8588 (JP)**
• **HIRANO Mitsuharu**
  **Yokohama-shi**
  **Kanagawa 244-8588 (JP)**
• **SOGAWA Ichiro**
  **Yokohama-shi**
  **Kanagawa 244-8588 (JP)**

(74) Representative: **Hoffmann Eitle**
**Patent- und Rechtsanwälte PartmbB**
**Arabellastraße 30**
**81925 München (DE)**

(54) **SPECTROSCOPIC IMAGING DEVICE ADJUSTING METHOD AND SPECTROSCOPIC IMAGING SYSTEM**

(57)    A spectroscopic imaging device adjusting method adjusts a relative arrangement relationship among a collimating lens, a diffraction grating, a condensing lens and an array type light receiving part so as to maximize the value of the following expression (1) for an output values $f_n$ from respective light receiving sensors $P_n$ when monochromatic light is inputted to a spectroscopic imaging device, wherein $\alpha > 1$ and $n$ is each integer equal to or larger than 1 and equal to or smaller than N.
[Expression 1]

$$\sum_{n=1}^{N} f_n^{\alpha} \quad \cdots \quad (1)$$

Fig.1

**Description**

**Technical Field**

The present invention relates to a method of adjusting spectroscopic imaging device and a spectroscopic imaging system.

**Background Art**

A spectroscopic imaging device includes a collimating lens that collimates input light, a diffraction grating to which light collimated by the collimating lens is inputted and which outputs the light in a different direction according to a wavelength, a condensing lens that condenses the light outputted from the diffraction grating at a different position according to the wavelength, and an array type light receiving part that receives the light condensed by the condensing lens with any of a plurality of light receiving sensors arrayed along a predetermined line. The spectroscopic imaging device can measure a spectrum of input light.

For instance, by measuring an absorption spectrum of a substance, the spectroscopic imaging device can analyze components of the substance. Also, by measuring a spectrum of interference fringes formed by object light and reference light, the spectroscopic imaging device can obtain the thickness of the object and a relative distance. Further, by measuring the spectrum of the interference fringes formed by the object light from a measurement object and the reference light by the spectroscopic imaging device and Fourier-transforming the interference spectrum, an FD-OCT (Fourier Domain Optical Coherence Tomography) can acquire an optical tomographic image in the depth direction of the measurement object in a noninvasive manner (See Patent Literature 1).

**Citation List**

**Patent Literature**

Patent Literature 1: Japanese Patent Application Laid-Open No.2011-024842

**Summary of Invention**

**Technical Problem**

In order to measure the spectrum of light with a high wavelength resolution by the spectroscopic imaging device, a condensing point of the light of respective wavelengths condensed by the condensing lens also needs to be positioned on the above-mentioned predetermined line. However, in the spectroscopic imaging device, the relative arrangement relationship among respective components sometimes varies due to an impact from the outside and loosening with time or the like. In this case, when the condensing point of the light of the respective wavelengths condensed by the condensing lens gets out of the above-mentioned predetermined line, the wavelength resolution and detection efficiency of the spectrum to be measured decline. Also, in the FD-OCT, when the condensing point of the light of the respective wavelengths condensed by the condensing lens in the spectroscopic imaging device gets out of the above-mentioned predetermined line, the intensity of the object light reflected at a long distance declines and sensitivity declines.

In order to solve such problems, when monochromatic light is inputted to the spectroscopic imaging device, the size of a condensing area on the plurality of light receiving sensors of the array type light receiving part is obtained, and the relative arrangement relationship of respective optical components of the spectroscopic imaging device is adjusted so as to make the condensing area small, the decline of the wavelength resolution and detection efficiency of the spectrum to be measured can be evaded.

However, in such an adjusting method, since the size of the condensing area on the plurality of light receiving sensors of the array type light receiving part needs to be at least about several times as large as the size of the respective light receiving sensors, it is difficult to accurately obtain the size of the condensing area under the condition. Also, when the plurality of monochromatic lights are inputted to the spectroscopic imaging device, since the respective size of the condensing area of each of the plurality of monochromatic lights in the array type light receiving part needs to be checked, the time required for adjustment becomes longer, and there is the possibility of erroneously determining noise as the condensing area.

The present invention has been made in order to solve the above-mentioned problems, and has an object to provide a spectroscopic imaging device adjusting method capable of easily adjusting the relative arrangement relationship among the respective components in the spectroscopic imaging device, and a spectroscopic imaging system to which such a spectroscopic imaging device adjusting method is applicable.

**Solution to Problem**

One aspect of the present invention relates to a spectroscopic imaging device adjusting method. The spectroscopic imaging device adjusting method is a method of adjusting a spectroscopic imaging device comprising a collimating lens which collimates input light, a diffraction grating which inputs the light collimated by the collimating lens and outputs the light in a different direction according to a wavelength, a condensing lens which condenses the light outputted from the diffraction grating at a different position according to the wavelength, and an array type light receiving part which receives the light condensed by the condensing lens with any of a plurality of light receiving sensors $P_1$ to $P_N$ arrayed along a predetermined line. A relative arrangement relationship among the collimating lens, the diffraction grating, the condensing lens and the array type light receiving part is adjusted so as to maximize a value of the following expression (1) for output values $f_n$ from the respective light receiving sensors $P_n$ when monochromatic light is inputted to the spectroscopic imaging device. Provided that $n$ is each integer equal to or larger than 1 and equal to or smaller than N. Also, in the spectroscopic imaging device adjusting method, the full width at half maximum of the spectrum of the monochromatic light may be smaller than a wavelength resolution of the array type light receiving part.

[Expression 1]

$$\sum_{n=1}^{N} f_n{}^{\alpha} \quad \cdots \quad (1)$$

(provided that, $\alpha > 1$)

Also, the spectroscopic imaging device adjusting method as another aspect of the present invention is a method of adjusting a spectroscopic imaging device comprising a collimating lens which collimates input light, a diffraction grating which inputs the light collimated by the collimating lens and outputs the light in a different direction according to a wavelength, a condensing lens which condenses the light outputted from the diffraction grating at a different position according to the wavelength, and an array type light receiving part which receives the light condensed by the condensing lens with any of a plurality of light receiving sensors $P_1$ to $P_N$ arrayed along a predetermined line. A plurality of monochromatic lights $\lambda_1$ to $\lambda_M$ having the full width at half maximum of the spectrum of each monochromatic light smaller than the wavelength resolution of the array type light receiving part and having the minimum value of the wavelength interval of two adjacent monochromatic lights larger than the wavelength resolution, are inputted to the spectroscopic imaging device. The plurality of light receiving sensors $P_1$ to $P_N$ are divided into M groups $G_1$ to $G_M$ so that a group $G_m$ includes the light receiving sensor in a continuous range including the condensing position of the monochromatic light $\lambda_m$ among the plurality of light receiving sensors $P_1$ to $P_N$. The relative arrangement relationship among the collimating lens, the diffraction grating, the condensing lens and the array type light receiving part is adjusted so as to maximize the value of the following expression (2) for output values $f_n$ from the respective light receiving sensors $P_n$. Provided that $n$ is each integer equal to or larger than 1 and equal to or smaller than $N$, $m$ is each integer equal to or larger than 1 and equal to or smaller than $M$. In the spectroscopic imaging device adjusting method, the minimum value of the wavelength interval of the two adjacent monochromatic lights may be at least 10 times as large as the wavelength resolution, and the wavelength bandwidth of the light received by the array type light receiving part may be at least 10 times as large as the maximum value of the wavelength interval of the two adjacent monochromatic lights.

[Expression 2]

$$\sum_{m=1}^{M} \frac{\sum\limits_{n \in G_m} f_n{}^{\alpha}}{\left( \sum\limits_{n \in G_m} f_n \right)^{\alpha}} \quad \cdots \quad (2)$$

(provided that, $\alpha > 1$)

The spectroscopic imaging system as yet another aspect of the present invention comprises a collimating lens which collimates input light, a diffraction grating which inputs the light collimated by the collimating lens and outputs the light in a different direction according to a wavelength, a condensing lens which condenses the light outputted from the diffraction grating at a different position according to the wavelength, an array type light receiving part which receives the light condensed by the condensing lens with any of a plurality of light receiving sensors arrayed along a predetermined line, a monochromatic light supply source arranged on an optical path of the light to be inputted to the collimating lens, the monochromatic light supply source inputting monochromatic light to the collimating lens, and adjusting means which adjusts a relative arrangement relationship among the collimating lens, the diffraction grating, the condensing lens, and the array type light receiving part.

In the spectroscopic imaging system, the full width at half maximum of the spectrum of the monochromatic light may be smaller than a wavelength resolution of the array type light receiving part. Also, the minimum value of the wavelength interval of the two adjacent monochromatic lights may be at least 10 times as large as the wavelength resolution of the array type light receiving part, and the wavelength bandwidth of the light received by the array type light receiving part may be at least 10 times as large as the maximum value of the wavelength interval of the two adjacent monochromatic lights.

**Advantageous Effects of Invention**

According to the present invention, the relative arrangement relationship among the respective components can be easily adjusted in the spectroscopic imaging device.

**Brief Description of Drawings**

[Fig. 1] Fig. 1 is a diagram illustrating a configuration of a spectroscopic imaging system 1 according to a first embodiment.
[Fig. 2] Fig. 2 is a chart illustrating line data outputted from an array type light receiving part 35 when monochromatic light outputted from a single wavelength light source 22 is inputted to a spectroscopic imaging device 30.

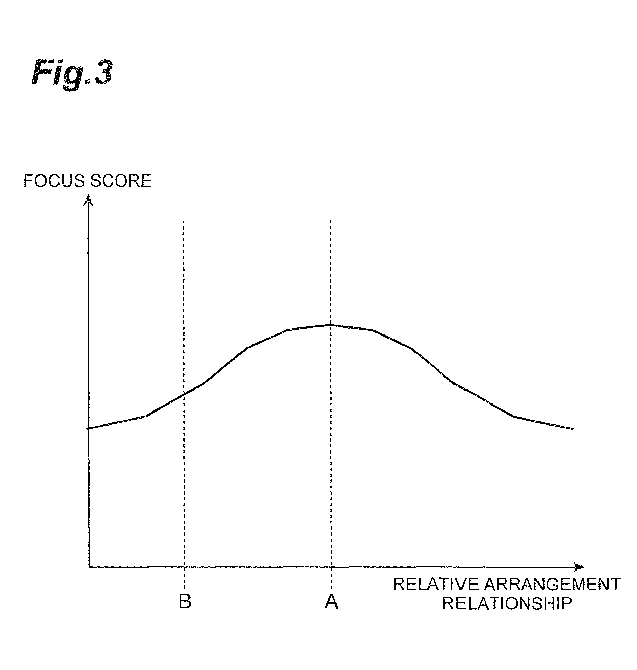

[Fig. 3] Fig. 3 is a chart illustrating a relationship between a relative arrangement relationship among respective optical components in the spectroscopic imaging device 30 and a focus score.
[Fig. 4] Fig. 4 is a diagram illustrating a configuration of a spectroscopic imaging system 1A which is a variation of the first embodiment.
[Fig. 5] Fig. 5 is a diagram illustrating a configuration of a spectroscopic imaging system 1B which is a variation of the first embodiment.
[Fig. 6] Fig. 6 is a diagram illustrating a configuration of a spectroscopic imaging system 1C which is a variation of the first embodiment.
[Fig. 7] Fig. 7 is a diagram illustrating a configuration of a spectroscopic imaging system 2 according to a second embodiment.
[Fig. 8] Fig. 8 is a chart illustrating line data outputted from the array type light receiving part 35 when the monochromatic lights with multiple wavelengths having the equal light quantity are inputted to the spectroscopic imaging device 30.
[Fig. 9] Fig. 9 is a chart illustrating line data outputted from the array type light receiving part 35 when the monochromatic lights with multiple wavelengths having different light quantities are inputted to the spectroscopic imaging device 30.
[Fig. 10] Fig. 10 is a diagram illustrating a configuration of a spectroscopic imaging system 2A which is a variation of the second embodiment.
[Fig. 11] Fig. 11 is a diagram illustrating a configuration of a spectroscopic imaging system 2B which is a variation of the second embodiment.
[Fig. 12] Fig. 12 is a diagram illustrating a configuration of a spectroscopic imaging system 2C which is a variation of the second embodiment.

**Description of Embodiments**

Hereinafter, embodiments of the present invention will be described in detail with reference to the accompanying drawings. The same symbol is attached to the same element in the descriptions of the drawings and redundant descriptions are omitted.

(First embodiment)

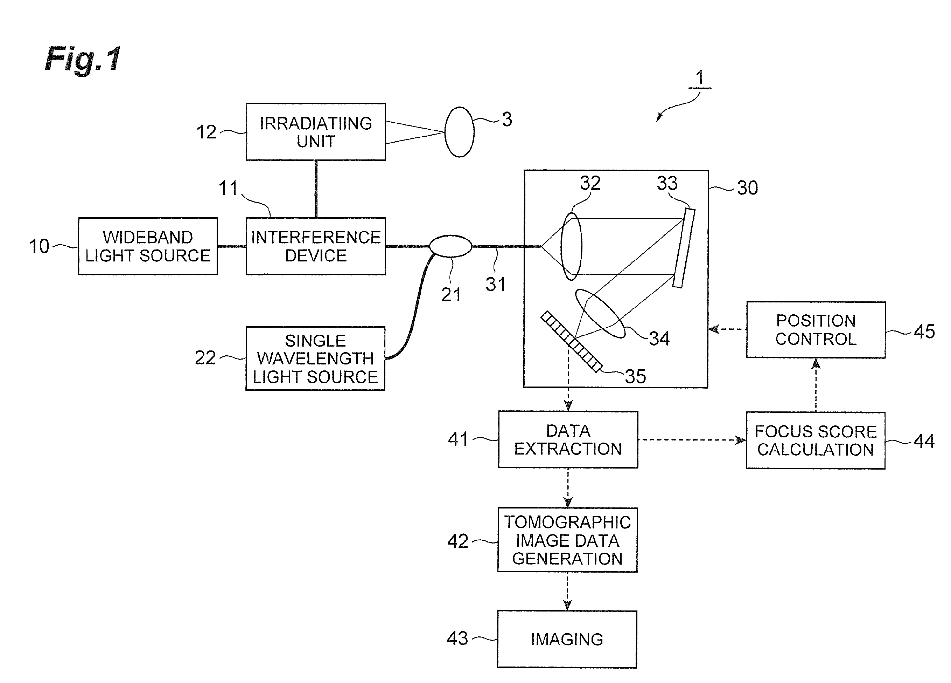

Fig. 1 is a diagram illustrating a configuration of a spectroscopic imaging system 1 according to the first embodiment. The spectroscopic imaging system 1 is for acquiring an optical tomographic image of a measurement object 3 by FD-OCT, and includes a light source 10, an interference device 11, an irradiating unit 12, a coupler 21, a single wavelength light source 22, a spectroscopic imaging device 30, a data extracting part 41, a tomographic image data generating part 42, an imaging part 43, a focus score calculating part 44, and a position controlling part 45.

The light source 10 is capable of outputting wideband continuous light. As the light source 10, for instance, an SC light source, an ASE light source, and an SLD or the like can be suitably used. The interference device 11 is a Michelson type interferometer, inputs light outputted from the light source 10, divides the light into two to attain measurement light and reference light, outputs the measurement light to the irradiating unit 12, then inputs, from the irradiating unit 12, object light which is generated in the measurement object 3 when the measurement object 3 is irradiated with the measurement light by the irradiating unit 12, and outputs interference light by the object light and the reference light to the coupler 21.

The single wavelength light source 22 outputs the monochromatic light of a single wavelength. The wavelength of the monochromatic light is the wavelength that can be detected by the spectroscopic imaging device 30. The full width at half maximum of the spectrum of the monochromatic light is smaller than the wavelength resolution of the array type light receiving part 35 (a value for which the bandwidth of the array type light receiving part 35 is divided by the number of light receiving sensors). The coupler 21 inputs the light outputted from the interference device 11 or the monochromatic light with single wavelength outputted from the single wavelength light source 22 to the spectroscopic imaging device 30. The coupler 21 and the single wavelength light source 22 configure a monochromatic light supply source for inputting the monochromatic light with single wavelength to the spectroscopic imaging device 30.

The spectroscopic imaging device 30 measures the spectrum of the light arriving from the coupler 21. The spectroscopic imaging device 30 includes an optical fiber 31, a collimating lens 32, a diffraction grating 33, a condensing lens 34 and an array type light receiving part 35. Also, the spectroscopic imaging device 30 includes adjusting means that adjusts the relative arrangement relationship among the collimating lens 32, the diffraction grating 33, the condensing lens 34, and the array type light receiving part 35.

The optical fiber 31 guides the light outputted from the coupler 21 and outputs the light from an end face. The collimating lens 32 collimates the light outputted from the end face of the optical fiber 31. The diffraction grating 33 inputs the light collimated by the collimating lens 32 and outputs the light in a different direction according to the wavelength. The condensing lens 34 condenses the light outputted from the diffraction grating 33 at a different position according to the wavelength. The array type light receiving part 35 has a plurality of light receiving sensors arrayed at a fixed pitch along a predetermined line and receives the light condensed by the condensing lens 34.

The adjusting means that adjusts the relative arrangement relationship includes means that moves the collimating lens 32, the diffraction grating 33, the condensing lens 34 and the array type light receiving part 35 respectively in parallel and means that changes directions of these components. In particular, the adjusting means includes means that adjusts the position of the collimating lens 32, and means that adjusts a distance between the condensing lens 34 and the array type light receiving part 35. As the adjusting means, a movable stage or the like is used.

The data extracting part 41 receives line data (a row of output data from the respective light receiving sensors) outputted from the plurality of light receiving sensors of the array type light receiving part 35. The tomographic image data generating part 42 Fourier-transforms the line data, and acquires one-dimensional optical tomographic images in a depth direction of the measurement object 3 on the basis of the result of the Fourier transformation. The irradiating unit 12 one-dimensionally or two-dimensionally scans irradiation of the measurement light to the measurement object 3, and the tomographic image data generating part 42 acquires the one-dimensional optical tomographic images in the depth direction of the measurement object 3 at respective irradiating positions during scanning thereof. Then, the imaging part 43 forms and displays the two-dimensional or three-dimensional optical tomographic images of the measurement object 3 by laminating the one-dimensional optical tomographic images acquired by the tomographic image data generating part 42.

The focus score calculating part 44 calculates an evaluation value (focus score) indicating the excellence degree of the relative arrangement relationship among the respective optical components in the spectroscopic imaging device 30, on the basis of the line data received from the array type light receiving part 35 by the data extracting part 41. The position controlling part 45 controls the adjusting means that adjusts the relative arrangement relationship among the respective optical components in the spectroscopic imaging device 30, on the basis of the focus score.

In this embodiment, in order to obtain the focus score and adjust the relative arrangement relationship among the respective optical components in the spectroscopic imaging device 30, the monochromatic light with single wavelength outputted from the single wavelength light source 22 is inputted to the spectroscopic imaging device 30. When the monochromatic light with single wavelength is inputted to the spectroscopic imaging device 30, a light intensity distribution on a light receiving surface of the array type light receiving part 35 has a peak at a position according to the wavelength, and the intensity declines with distance from the position. It is assumed that each of the plurality of light receiving sensors of the array type light receiving part 35 is in a linear relationship that output data is fixed with respect to incident light intensity.

The line data $f(x)$ outputted from the array type light receiving part 35 is expressed by a Gaussian function in the following expression (3). A value $a$ is a positive value and indicates the size of a condensing area on the light receiving surface of the array type light receiving part 35. The line data outputted from the array type light receiving part 35 is actually discrete for a position x, however, is handled here as a function in which the position x is a variable.

[Expression 3]

$$f(x) = a^{1/2} \exp\left(- ax^2\right) \quad \cdots \quad (3)$$

An integrated value (called "simple sum", hereinafter) of the line data $f(x)$ is expressed by the following expression (4a). The value of the simple sum is a fixed value regardless of the value $a$, and is independent of the size of the condensing area. In the meantime, the integrated value of the $\alpha$-th power (called "$\alpha$-th power sum", hereinafter) of the line data $f(x)$ is expressed by the following expression (4b). When it is $\alpha > 1$, as the value $a$ is larger (as the condensing area is narrower), the value of the $\alpha$-th power sum is larger. From this, the value of the $\alpha$-th power sum is defined as the focus score, and the relative arrangement relationship among the respective optical components in the spectroscopic imaging device 30 may be adjusted so as to increase the value.

[Expression 4]

$$\int f(x)dx = \sqrt{\pi} \quad \cdots \quad (4a)$$

$$\int \{f(x)\}^\alpha dx = \sqrt{\frac{\pi}{\alpha}} a^{\frac{\alpha-1}{2}} \quad \cdots \quad (4b)$$

However, the line data outputted from the array type light receiving part 35 is actually discrete for the position x. Then, the plurality of arrayed light receiving sensors of the array type light receiving part 35 are defined as $P_1$ to $P_N$, the output values from the respective light receiving sensors $P_n$ when the monochromatic light is inputted to the spectroscopic imaging device 30 are defined as $f_n$, the value of the following expression (5) is defined as the focus score, and the relative arrangement relationship among the respective optical components in the spectroscopic imaging device 30 may be adjusted so as to maximize the focus score.

[Expression 5]

$$\sum_{n=1}^{N} f_n^\alpha \quad \cdots \quad (5)$$

(provided that, $\alpha > 1$)

When adjusting the relative arrangement relationship among the respective optical components in the spectroscopic imaging device 30, the coupler 21 does not input the light from the interference device 11 to the spectroscopic imaging device 30, but inputs the monochromatic light from the single wavelength light source 22 to the spectroscopic imaging device 30. The coupler 21 may be an optical switch for selecting either one of the light outputted from the interference device 11 and the monochromatic light outputted from the single wavelength light source 22 and inputting it to the spectroscopic imaging device 30.

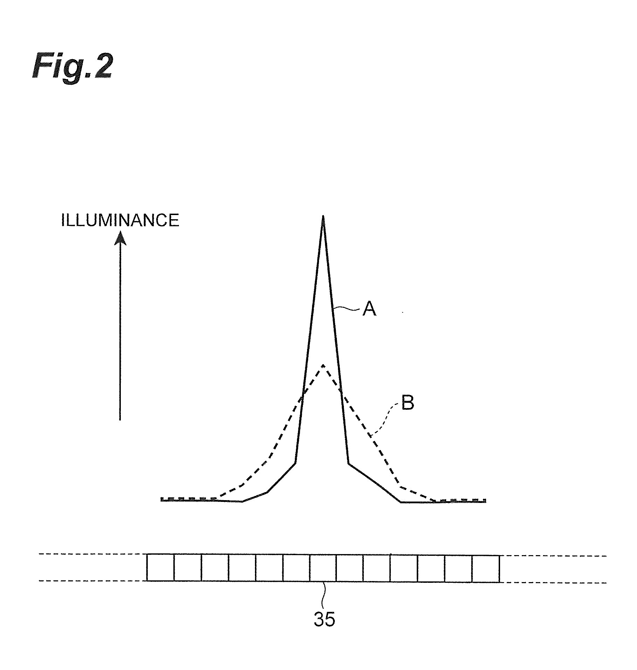

Fig. 2 is a chart illustrating the line data outputted from the array type light receiving part 35 when the monochromatic light outputted from the single wavelength light source 22 is inputted to the spectroscopic imaging device 30.

The line data has a peak at a position according to the wavelength of the monochromatic light, and the value declines with distance from the peak position. In the case A that the relative arrangement relationship among the respective optical components in the spectroscopic imaging device 30 is excellent, the peak of the line data is high, and the width of the peak is narrow. On the other hand, in the case B that the relative arrangement relationship is not sufficient, the peak of the line data is low, and the width of the peak is wide.

Fig, 3 is a chart illustrating a relationship between the relative arrangement relationship among the respective optical components in the spectroscopic imaging device 30 and the focus score. A horizontal axis indicates the relative arrangement relationship among the respective optical components in the spectroscopic imaging device 30, that is, the positions and the directions of the respective optical components. In comparison with the case B that the relative arrangement relationship among the respective optical components in the spectroscopic imaging device 30 is not sufficient, in the case A that the relative arrangement relationship is excellent, the focus score is high. With respect to the continuous change of the relative arrangement relationship among the respective optical components in the spectroscopic imaging device 30, the shape (peak height and width) of the line data also continuously changes, and the focus score also continuously changes.

Therefore, when the change of the focus score is checked while adjusting the relative arrangement relationship among the respective optical components in the spectroscopic imaging device 30, and the relative arrangement relationship in which the focus score becomes the maximum is obtained, the best relative arrangement relationship can be obtained. Also, the relative arrangement relationship among the respective optical components in the spectroscopic imaging device 30 may be cyclically changed, the fluctuation component of the same cycle in the focus score obtained at the time may be extracted, and the relative arrangement relationship may be adjusted to minimize the component.

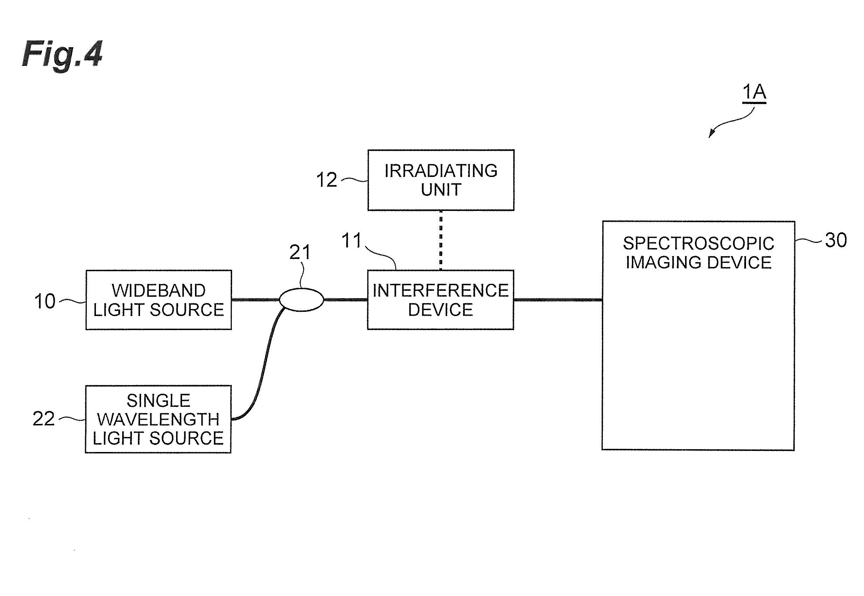

Fig. 4 to Fig. 6 are diagrams illustrating configurations of variations of the first embodiment. In comparison with the configuration illustrated in Fig. 1, variations illustrated in Fig. 4 to Fig. 6 are different regarding the configuration of the monochromatic light supply source that inputs the monochromatic light with single wavelength to the spectroscopic imaging device 30.

Fig. 4 is a diagram illustrating a configuration of a spectroscopic imaging system 1A which is a variation of the first embodiment. In comparison with the configuration illustrated in Fig. 1, the spectroscopic imaging system 1A illustrated in Fig. 4 is the same in that the coupler 21 and the single wavelength light source 22 are provided as the monochromatic light supply source for inputting the monochromatic light with single wavelength to the spectroscopic imaging device 30, but is different in that the coupler 21 is provided between the light source 10 and the interference device 11. When adjusting the relative arrangement relationship among the respective optical components in the spectroscopic imaging device 30, the coupler 21 does not input the light from the light source 10 to the interference device 11 but inputs the monochromatic light from the single wavelength light source 22 to the interference device 11. The coupler 21 may be an optical switch for selecting either one of the light outputted from the light source 10 and the monochromatic light outputted from the single wavelength light source 22 and inputting it to the interference device 11. In this variation, the light source 10 and the single wavelength light source 22 can be put together into one.

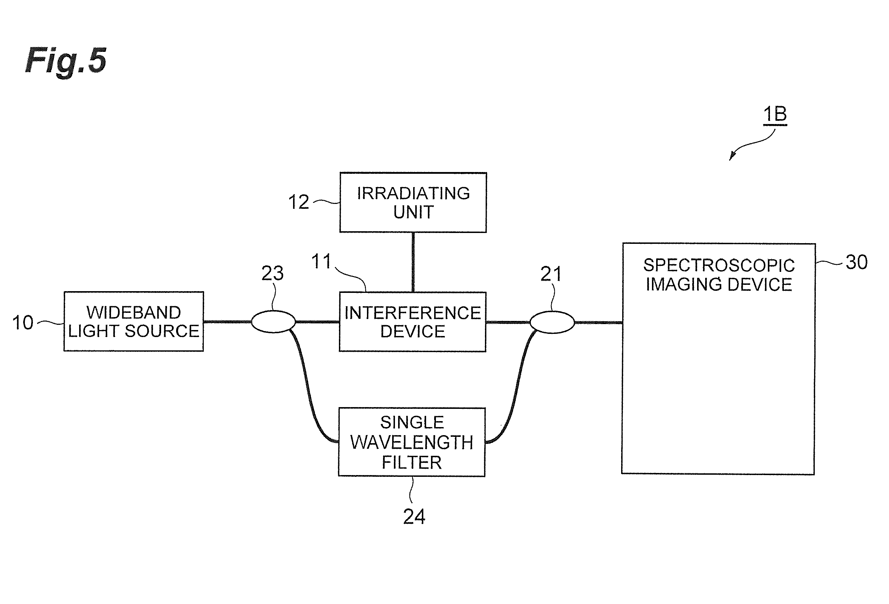

Fig. 5 is a diagram illustrating a configuration of a spectroscopic imaging system 1B which is a variation of the first embodiment. In comparison with the configuration illustrated in Fig. 1, the spectroscopic imaging system 1B illustrated in Fig. 5 is different in that the coupler 21, a divider 23 and a single wavelength transmission filter 24 are provided as the monochromatic light supply source for inputting the monochromatic light with single wavelength to the spectroscopic imaging device 30. The divider 23 is provided between the light source 10 and the interference device 11. The coupler 21 is provided between the interference device 11 and the spectroscopic imaging device 30. A transmission bandwidth of the single wavelength transmission filter 24 is narrower than the wavelength resolution of the spectroscopic imaging device 30. When adjusting the relative arrangement relationship among the respective optical components in the spectroscopic imaging device 30, the light outputted from the light source 10 is introduced into the single wavelength transmission filter 24 by the divider 23, and the monochromatic light with single wavelength transmitted through the single wavelength transmission filter 24 is inputted to the spectroscopic imaging device 30 by the coupler 21. The coupler 21 or the divider 23 may be an optical switch. In this variation, it is not needed to provide the single wavelength light source for obtaining the focus score separately from the light source 10.

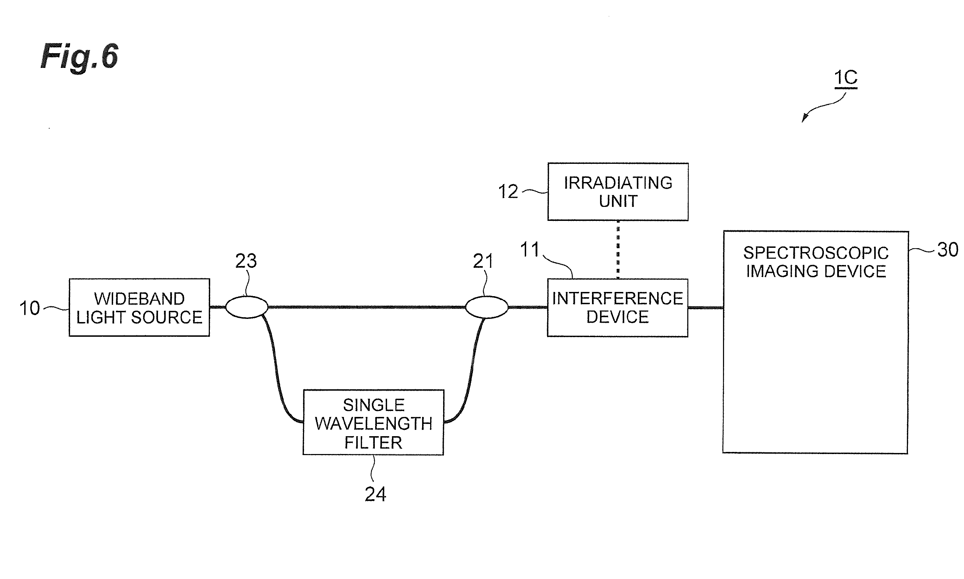

Fig. 6 is a diagram illustrating a configuration of a spectroscopic imaging system 1C which is a variation of the first embodiment. In comparison with the configuration illustrated in Fig. 5, the spectroscopic imaging system 1C illustrated in Fig. 6 is the same in that the coupler 21, the divider 23 and the single wavelength transmission filter 24 are provided as the monochromatic light supply source for inputting the monochromatic light with single wavelength to the spectroscopic imaging device 30, but is different in that both of the coupler 21 and the divider 23 are provided between the light source 10 and the interference device 11. The coupler 21 or the divider 23 may be an optical switch. Also in this variation, it is not needed to provide the single wavelength light source for obtaining the focus score separately from the light source 10.

(Second embodiment)

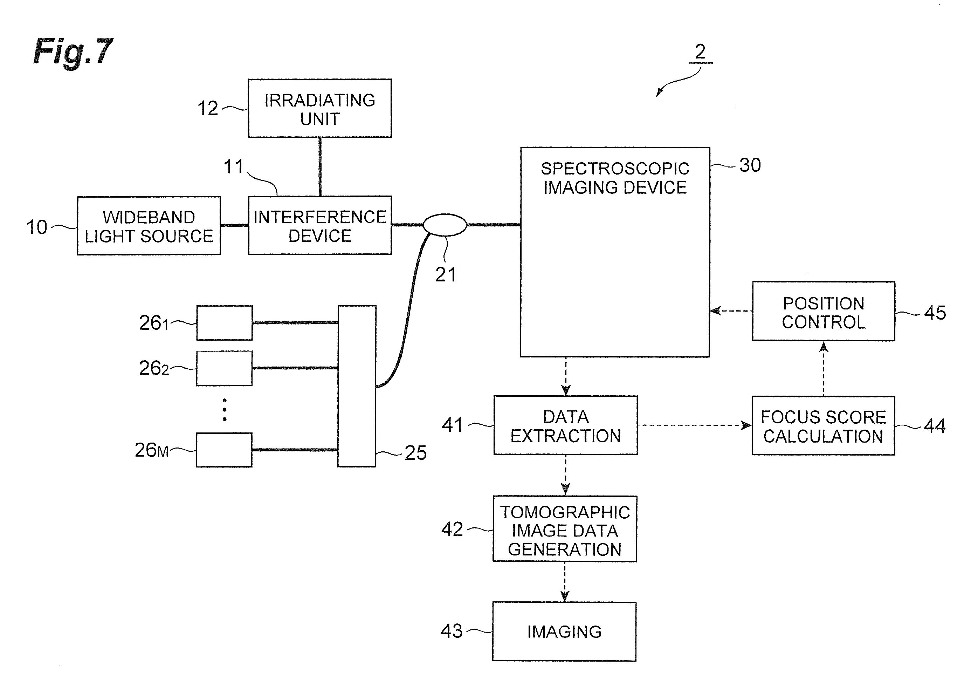

Fig. 7 is a diagram illustrating a configuration of a spectroscopic imaging system 2 according to a second embodiment. The spectroscopic imaging system 2 is for acquiring an optical tomographic image of a measurement object by FD-OCT, and includes the light source 10, the interference device 11, the irradiating unit 12, the coupler 21, a multiplexer 25, single wavelength light sources $26_1$ to $26_M$, the spectroscopic imaging device 30, the data extracting part 41, the tomographic image data generating part 42, the imaging part 43, the focus score calculating part 44, and the position controlling part 45.

In comparison with the configuration of the first embodiment illustrated in Fig. 1, the spectroscopic imaging system 2 illustrated in Fig. 7 is different in that the coupler 21, the multiplexer 25 and the plurality of single wavelength light sources $26_1$ to $26_M$ are provided as the monochromatic light supply source that inputs the monochromatic light to the spectroscopic imaging device 30.

Each single wavelength light source $26_m$ outputs the monochromatic light with a center wavelength $\lambda_m$. The wavelengths $\lambda_1$ to $\lambda_M$ are the wavelengths that can be detected by the spectroscopic imaging device 30, and are different from each other. The full width at half maximum of the spectrum of each monochromatic light is smaller than the wavelength resolution of the array type light receiving part 35. The minimum value of the wavelength interval of the two adjacent monochromatic lights is larger than the wavelength resolution of the array type light receiving part 35. It is suitable that the minimum value of the wavelength interval of the two adjacent monochromatic lights is at least 10 times as large as the wavelength resolution of the array type light receiving part 35, and it is suitable that the wavelength bandwidth of the light received by the array type light receiving part 35 is at least 10 times as large as the maximum value of the wavelength interval of the two adjacent monochromatic lights.

The multiplexer 25 multiplexes the monochromatic lights with the wavelengths $\lambda_1$ to $\lambda_M$ outputted from the plurality of single wavelength light sources $26_1$ to $26_M$ and outputs the multiplexed light to the coupler 21. The coupler 21 inputs the light outputted from the interference device 11 or the monochromatic lights with multiple wavelengths outputted from the multiplexer 25 to the spectroscopic imaging device 30.

In this embodiment, in order to obtain the focus score and adjust the relative arrangement relationship among the respective optical components in the spectroscopic imaging device 30, the monochromatic lights with the wavelengths $\lambda_1$ to $\lambda_M$ outputted from the plurality of single wavelength light sources $26_1$ to $26_M$ are multiplexed and inputted to the spectroscopic imaging device 30. When the monochromatic lights with the multiple wavelengths are inputted to the spectroscopic imaging device 30, a light intensity distribution on a light receiving surface of the array type light receiving part 35 has a peak at a position according to each wavelength, and the intensity declines with distance from the position.

When the light quantities of the monochromatic lights outputted from the plurality of single wavelength light sources $26_1$ to $26_M$ are fixed, the relative arrangement relationship among the respective optical components in the spectroscopic imaging device 30 can be adjusted on the basis of the focus score similar to that in the first embodiment. When the light quantities of the monochromatic lights outputted from the plurality of single wavelength light sources $26_1$ to $26_M$ are not fixed, the relative arrangement relationship is adjusted as follows.

The line data outputted from the array type light receiving part 35 is expressed by the sum of a Gaussian function $f_m(x)$ in the following expression (6). The Gaussian function $f_m(x)$ expresses the line data to be outputted from the array type light receiving part 35 when only the monochromatic light with the wavelength $\lambda_m$ outputted from the single wavelength light source $26_m$ is inputted to the spectroscopic imaging device 30. A value $A_m$ indicates the light quantity of the monochromatic light with the wavelength $\lambda_m$, a value $\alpha_m$ indicates the size of the condensing area of the monochromatic light with the wavelength $\lambda_m$, and a value $x_{0m}$ indicates a peak position in the condensing area of the monochromatic light with the wavelength $\lambda_m$.

[Expression 6]

$$f_m(x) = A_m a_m^{1/2} \exp\left(-a_m\left(x - x_{0m}\right)^2\right) \quad \cdots \quad (6)$$

The simple sum is expressed by the following expression (7a). The value of the simple sum is a fixed value regardless of the value $a_m$, and is independent of the size of the condensing area. In the meantime, the $\alpha$-th power sum is expressed by the following expression (7b). When it is $\alpha > 1$, as the value $a_m$ is larger (as the condensing area is narrower), the value of the $\alpha$-th power sum is larger. However, for the value of the $\alpha$-th power sum, contribution of the monochromatic light with the wavelength $\lambda_m$ having a large light quantity $A_m$ is great.

[Expression 7]

$$\int \sum f_m(x)dx = \sqrt{\pi} \sum A_m \qquad \cdots \quad (7a)$$

$$\int \left\{ \sum f_m(x) \right\}^\alpha dx \cong \sqrt{\frac{\pi}{\alpha}} \sum A_m{}^\alpha a_m{}^{\frac{\alpha-1}{2}} \qquad \cdots \quad (7b)$$

Then, in this embodiment, the plurality of light receiving sensors $P_1$ to $P_N$ are divided into M groups $G_1$ to $G_M$ so that a group $G_m$ includes the light receiving sensor in a continuous range including the condensing position of the monochromatic light $\lambda_m$ among the plurality of light receiving sensors $P_1$ to $P_N$ of the array type light receiving part 35. Each group $G_m$ includes the light receiving sensor at the condensing position of the monochromatic light $\lambda_m$, and the light receiving sensor in the vicinity of the light receiving sensor. Then, the ratio of the value of the $\alpha$-th power of the simple sum and the $\alpha$-th power sum (the following expression (8)) in each group $G_m$ is obtained, and the total sum of the ratio (the following expression (9)) is defined as a focus score. The focus score is independent of the light quantity $A_m$ of each monochromatic light $\lambda_m$. The relative arrangement relationship among the respective optical components in the spectroscopic imaging device 30 may be adjusted so as to maximize the focus score.
[Expression 8]

$$\frac{\int_{G_m} \left\{ f_m(x) \right\}^\alpha dx}{\left\{ \int_{G_m} f_m(x)dx \right\}^\alpha} = \frac{\sqrt{\dfrac{\pi}{\alpha}} A_m{}^\alpha a_m{}^{\frac{\alpha-1}{2}}}{\left( \sqrt{\pi} A_m \right)^\alpha} = \alpha^{-\frac{1}{2}} \pi^{\frac{1-\alpha}{2}} a_m{}^{\frac{\alpha-1}{2}} \qquad \cdots \quad (8)$$

[Expression 9]

$$\sum_m \frac{\int_{G_m} \left\{ f_m(x) \right\}^\alpha dx}{\left\{ \int_{G_m} f_m(x)dx \right\}^\alpha} = \alpha^{-\frac{1}{2}} \pi^{\frac{1-\alpha}{2}} a_m{}^{\frac{\alpha-1}{2}} = \alpha^{-\frac{1}{2}} \pi^{\frac{1-\alpha}{2}} \sum_m a_m{}^{\frac{\alpha-1}{2}} \qquad \cdots \quad (9)$$

However, the line data outputted from the array type light receiving part 35 is actually discrete for the position x. Then, the plurality of arrayed light receiving sensors of the array type light receiving part 35 are defined as $P_1$ to $P_N$, the output values from the respective light receiving sensors $P_n$ when the monochromatic lights with multiple wavelengths $\lambda_1$ to $\lambda_M$ are inputted to the spectroscopic imaging device 30 are defined as $f_n$, the value of the following expression (10) is defined as the focus score, and the relative arrangement relationship among the respective optical components in the spectroscopic imaging device 30 may be adjusted so as to maximize the focus score.
[Expression 10]

$$\sum_{m=1}^{M} \frac{\displaystyle\sum_{n\in G_m} f_n^{\alpha}}{\left(\displaystyle\sum_{n\in G_m} f_n\right)^{\alpha}} \quad \cdots \quad (10)$$

(provided that, $\alpha > 1$)

When adjusting the relative arrangement relationship among the respective optical components in the spectroscopic imaging device 30, the coupler 21 does not input the light from the interference device 11 to the spectroscopic imaging device 30, but inputs the monochromatic lights with multiple wavelengths from the multiplexer 25 to the spectroscopic imaging device 30. The coupler 21 may be an optical switch that selects either one of the light outputted from the interference device 11 and the monochromatic lights with multiple wavelengths outputted from the multiplexer 25 and inputs it to the spectroscopic imaging device 30.

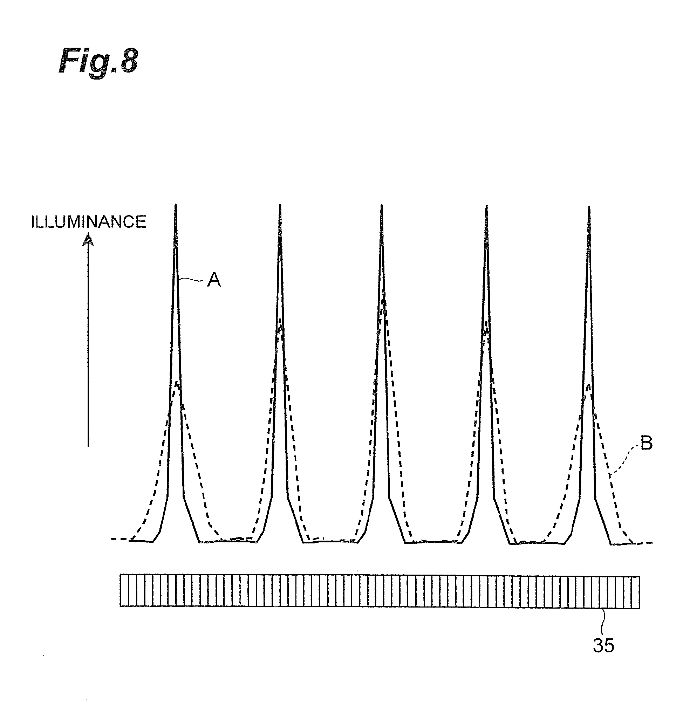

Fig. 8 is a chart illustrating the line data outputted from the array type light receiving part 35 when the monochromatic lights with multiple wavelengths having the equal light quantity are inputted to the spectroscopic imaging device 30. The line data has a peak at a position according to each wavelength of the monochromatic light, and the value declines with distance from the peak position. In the case A that the relative arrangement relationship among the respective optical components in the spectroscopic imaging device 30 is excellent, all the peaks of the line data are high, and the widths of all the peaks are narrow. On the other hand, in the case B that the relative arrangement relationship is not sufficient, one of the peaks of the line data is low, and the width of one of the peaks is wide. When the light quantities of the monochromatic lights with multiple wavelengths are equal, the relative arrangement relationship among the respective optical components in the spectroscopic imaging device 30 can be adjusted on the basis of the focus score similar to that in the first embodiment.

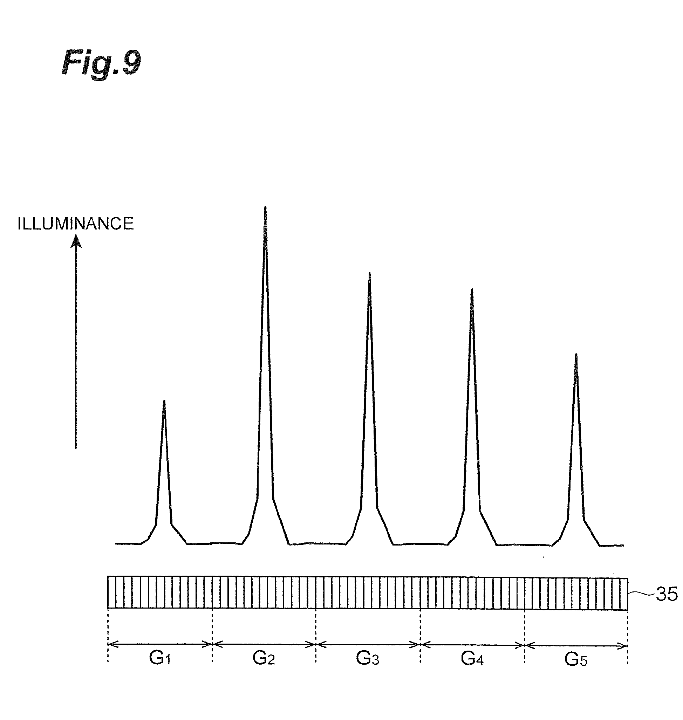

Fig. 9 is a chart illustrating the line data outputted from the array type light receiving part 35 when the monochromatic light of the multiple wavelengths having different light quantities are inputted to the spectroscopic imaging device 30. A state like this may occur when there is a difference in the output intensities of the monochromatic lights with respective wavelengths, or when the loss of a route is different depending on the wavelength. In the case of the state like this, the relative arrangement relationship among the respective optical components in the spectroscopic imaging device 30 can be adjusted on the basis of the focus score in the above-mentioned expression (10).

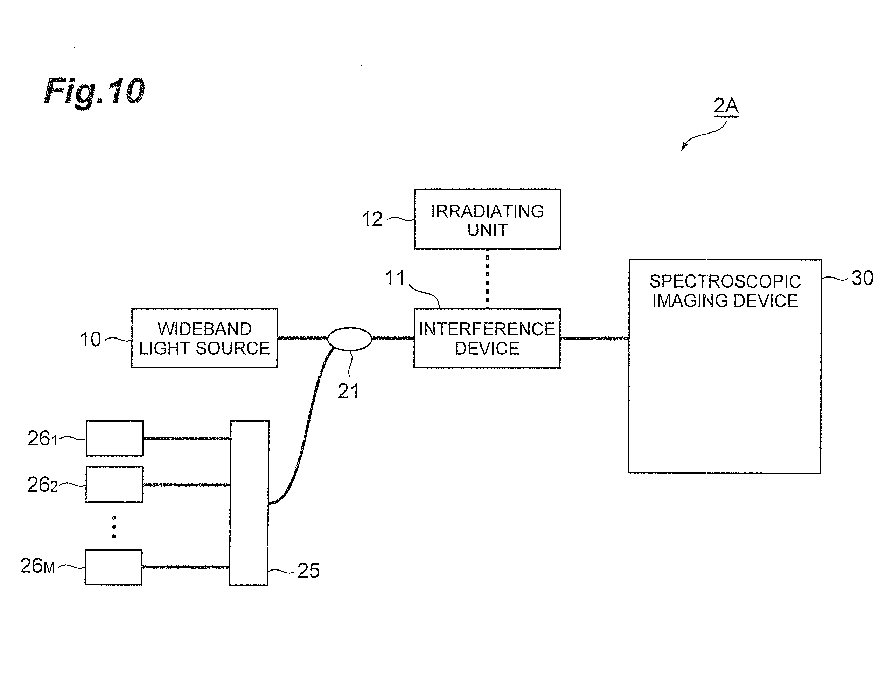

Fig. 10 to Fig. 12 are diagrams illustrating configurations of variations of the second embodiment. In comparison with the configuration illustrated in Fig. 7, variations illustrated in Fig. 10 to Fig. 12 are different regarding the configuration of the monochromatic light supply source that inputs the monochromatic lights with multiple wavelengths to the spectroscopic imaging device 30.

Fig. 10 is a diagram illustrating a configuration of a spectroscopic imaging system 2A which is a variation of the second embodiment. In comparison with the configuration illustrated in Fig. 7, the spectroscopic imaging system 2A illustrated in Fig. 10 is the same in that the coupler 21, the multiplexer 25 and the single wavelength light sources $26_1$ to $26_M$ are provided as the monochromatic light supply source that inputs the monochromatic lights with multiple wavelengths to the spectroscopic imaging device 30, but is different in that the coupler 21 is provided between the light source 10 and the interference device 11. When adjusting the relative arrangement relationship among the respective optical components in the spectroscopic imaging device 30, the coupler 21 does not input the light from the light source 10 to the interference device 11, but inputs the monochromatic lights with multiple wavelengths from the multiplexer 25 to the interference device 11. The coupler 21 may be an optical switch that selects either one of the light outputted from the light source 10 and the monochromatic lights with multiple wavelengths outputted from the multiplexer 25 and inputs it to the interference device 11. In this variation, the light source 10 and the single wavelength light sources $26_1$ to $26_M$ can be put together into one.

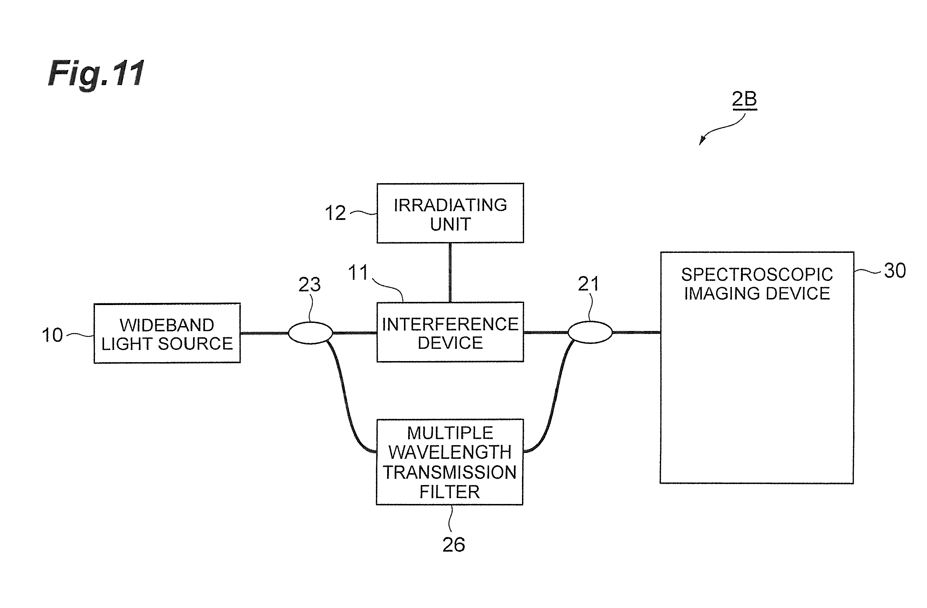

Fig. 11 is a diagram illustrating a configuration of a spectroscopic imaging system 2B which is a variation of the second embodiment. In comparison with the configuration illustrated in Fig. 7, the spectroscopic imaging system 2B illustrated in Fig. 11 is different in that the coupler 21, a divider 23 and a multiple wavelength transmission filter 26 are provided as the monochromatic light supply source that inputs the monochromatic lights with multiple wavelengths to the spectroscopic imaging device 30. The divider 23 is provided between the light source 10 and the interference device 11. The coupler 21 is provided between the interference device 11 and the spectroscopic imaging device 30. The multiple wavelength transmission filter 26 is capable of transmitting the discrete light of the multiple wavelengths, and is an etalon filter for instance. The respective transmission bandwidths of the multiple wavelength transmission filter 26 are narrower than the wavelength resolution of the spectroscopic imaging device 30. When adjusting the relative arrangement relationship among the respective optical components in the spectroscopic imaging device 30, the light outputted from the light source 10 is introduced into the multiple wavelength transmission filter 26 by the divider 23, and the monochromatic lights with multiple wavelengths transmitted through the multiple wavelength transmission filter 26 are inputted to the spectroscopic imaging device 30 by the coupler 21. The coupler 21 or the divider 23 may be an optical switch. In this variation, it is not needed to provide a plurality of single wavelength light sources for obtaining the focus score separately from the light source 10.

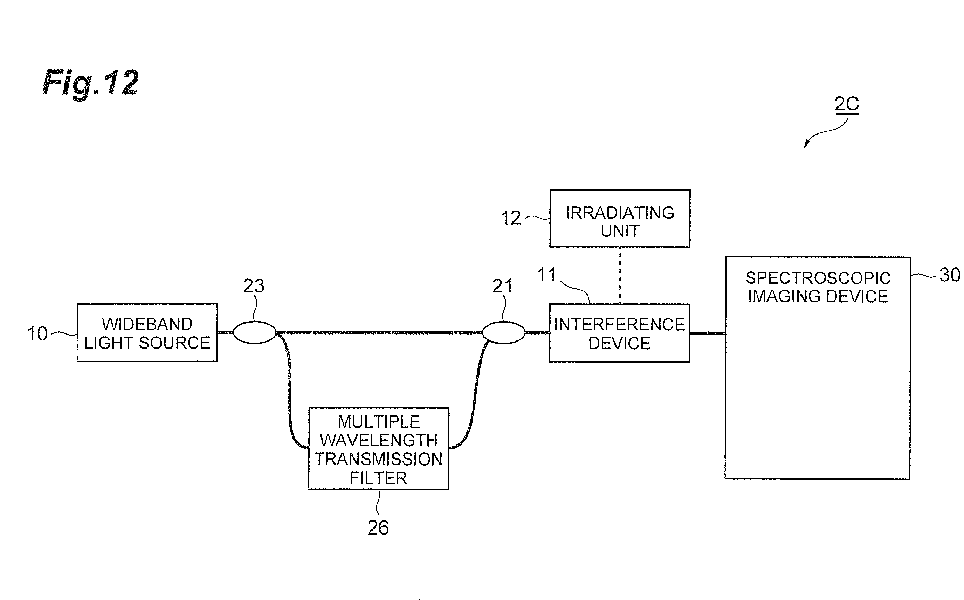

Fig. 12 is a diagram illustrating a configuration of a spectroscopic imaging system 2C which is a variation of the second embodiment. In comparison with the configuration illustrated in Fig. 11, the spectroscopic imaging system 2C illustrated in Fig. 12 is the same in that the coupler 21, the divider 23 and the multiple wavelength transmission filter 26 are provided as the monochromatic light supply source that inputs the monochromatic light of the multiple wavelengths to the spectroscopic imaging device 30, but is different in that both of the coupler 21 and the divider 23 are provided between the light source 10 and the interference device 11. The coupler 21 or the divider 23 may be an optical switch. Also in this variation, it is not needed to provide the single wavelength light source for obtaining the focus score separately from the light source 10.

Industrial Applicability

According to the present invention, the relative arrangement relationship among the respective components in a spectroscopic imaging device can be easily adjusted.

Reference Signs List

1, 1A, 1B, 1C, 2, 2A, 2B, 2C ... Spectroscopic imaging system, 3 ... Measurement object, 10 ... Light source, 11 ... Interference device, 12 ... Irradiating unit, 21 ... Coupler, 22 ... Single wavelength light source, 23 ... Divider, 24 ... Single wavelength transmission filter, 25 ... Multiplexer, $26_1$ to $26_M$ ... Single wavelength light source, 27 ... Multiple wavelength transmission filter, 30 ...Spectroscopic imaging device, 31 ... Optical fiber, 32 ... Collimating lens, 33 ... Diffraction grating, 34 ... Condensing lens, 35 ... Array type light receiving part, 41 ... Data extracting part, 42 ... Tomographic image data generating part, 43 ... Imaging part, 44 ... Focus score calculating part, 45 ... Position controlling part.

**Claims**

1. A method of adjusting a spectroscopic imaging device comprising a collimating lens which collimates input light, a diffraction grating which inputs the light collimated by the collimating lens and outputs the light in a different direction according to a wavelength, a condensing lens which condenses the light outputted from the diffraction grating at a different position according to the wavelength, and an array type light receiving part which receives the light condensed by the condensing lens with any of a plurality of light receiving sensors $P_1$ to $P_N$ arrayed along a predetermined line, the method comprising;
adjusting a relative arrangement relationship among the collimating lens, the diffraction grating, the condensing lens and the array type light receiving part so as to maximize a value of the following expression (1):
[Expression 1]

$$\sum_{n=1}^{N} f_n{}^{\alpha} \qquad \cdots \quad (1)$$

for output values $f_n$ from the respective light receiving sensors $P_n$ when monochromatic light is inputted to the spectroscopic imaging device, wherein $\alpha > 1$ and $n$ is each integer equal to or larger than 1 and equal to or smaller than N.

2. The method of adjusting the spectroscopic imaging device according to claim 1,
wherein a full width at half maximum of a spectrum of the monochromatic light is smaller than a wavelength resolution of the array type light receiving part.

3. A method of adjusting a spectroscopic imaging device comprising a collimating lens which collimates input light, a diffraction grating which inputs the light collimated by the collimating lens and outputs the light in a different direction according to a wavelength, a condensing lens which condenses the light outputted from the diffraction grating at a different position according to the wavelength, and an array type light receiving part which receives the light condensed by the condensing lens with any of a plurality of light receiving sensors $P_1$ to $P_N$ arrayed along a predetermined line, the method comprising;

inputting, to the spectroscopic imaging device, a plurality of monochromatic lights $\lambda_1$ to $\lambda_M$ having a full width at half maximum of a spectrum of each monochromatic light smaller than a wavelength resolution of the array type light receiving part and having a minimum value of a wavelength interval of two adjacent monochromatic lights larger than the wavelength resolution,

dividing the plurality of light receiving sensors $P_1$ to $P_N$ into M groups $G_1$ to $G_M$ so that a group $G_m$ includes the light receiving sensor in a continuous range including the condensing position of the monochromatic light $\lambda_m$ among the plurality of light receiving sensors $P_1$ to $P_N$, and adjusting a relative arrangement relationship among the collimating lens, the diffraction grating, the condensing lens and the array type light receiving part so as to maximize the value of the following expression (2):

[Expression 2]

$$\sum_{m=1}^{M} \frac{\sum_{n \in G_m} f_n^{\alpha}}{\left(\sum_{n \in G_m} f_n\right)^{\alpha}} \quad \cdots \quad (2)$$

for output values $f_n$ from the respective light receiving sensors $P_n$, wherein $\alpha > 1$ and $n$ is each integer equal to or larger than 1 and equal to or smaller than N, $m$ is each integer equal to or larger than 1 and equal to or smaller than M.

4. The method of adjusting the spectroscopic imaging device according to claim 3,
   wherein the minimum value of the wavelength interval of the two adjacent monochromatic lights is at least 10 times as large as the wavelength resolution, and
   the wavelength bandwidth of the light received by the array type light receiving part is at least 10 times as large as the maximum value of the wavelength interval of the two adjacent monochromatic lights.

5. A spectroscopic imaging system comprising:

   a collimating lens which collimates input light;
   a diffraction grating which inputs light collimated by the collimating lens and outputs the light in a different direction according to a wavelength;
   a condensing lens which condenses the light outputted from the diffraction grating at a different position according to the wavelength;
   an array type light receiving part which receives the light condensed by the condensing lens with any of a plurality of light receiving sensors arrayed along a predetermined line;
   a monochromatic light supply source arranged on an optical path of the light to be inputted to the collimating lens, the monochromatic light supply source inputting monochromatic light to the collimating lens; and
   adjusting means which adjusts a relative arrangement relationship among the collimating lens, the diffraction grating, the condensing lens, and the array type light receiving part.

6. The spectroscopic imaging system according to claim 5, wherein a full width at half maximum of a spectrum of the monochromatic light is smaller than a wavelength resolution of the array type light receiving part.

7. The spectroscopic imaging system according to claim 5 or 6,
   wherein a minimum value of a wavelength interval of two adjacent monochromatic lights is at least 10 times as large as the wavelength resolution of the array type light receiving part, and
   the wavelength bandwidth of the light received by the array type light receiving part is at least 10 times as large as the maximum value of the wavelength interval of the two adjacent monochromatic lights.

**Fig.1**

# Fig.2

*Fig.3*

FOCUS SCORE

RELATIVE ARRANGEMENT
RELATIONSHIP

B          A

*Fig.4*

EP 2 871 451 A1

EP 2 871 451 A1

*Fig.5*

1B

```
                              ┌─────────────┐
                         12 ──│ IRRADIATING │
                              │    UNIT      │
                              └──────┬──────┘
                                     │
         23          11              │              21
┌──────────────┐    ┌────────────────────┐    ┌──────────────────┐
│  WIDEBAND    │────│    INTERFERENCE    │────│  SPECTROSCOPIC   │── 30
10 ─│ LIGHT SOURCE │    │       DEVICE       │    │ IMAGING DEVICE   │
└──────────────┘    └────────────────────┘    └──────────────────┘

                    ┌────────────────────┐
                    │      SINGLE        │
                    │    WAVELENGTH      │
                    │      FILTER        │
                    └────────────────────┘
                             │
                            24
```

**Fig.6**

1C

30 SPECTROSCOPIC IMAGING DEVICE

11 INTERFERENCE DEVICE

12 IRRADIATING UNIT

21

23

24 SINGLE WAVELENGTH FILTER

10 WIDEBAND LIGHT SOURCE

Fig.7

EP 2 871 451 A1

# Fig.8

## Fig.9

ILLUMINANCE

35

G1   G2   G3   G4   G5

Fig.10

# Fig.11

- WIDEBAND LIGHT SOURCE — 10
- IRRADIATING UNIT — 12
- INTERFERENCE DEVICE — 11
- MULTIPLE WAVELENGTH TRANSMISSION FILTER — 26
- SPECTROSCOPIC IMAGING DEVICE — 30
- 23
- 21
- 2B

EP 2 871 451 A1

## Fig.12

EP 2 871 451 A1

## INTERNATIONAL SEARCH REPORT

| International application No. |
| --- |
| PCT/JP2013/068266 |

A. CLASSIFICATION OF SUBJECT MATTER
*G01J3/02*(2006.01)i, *G01J3/36*(2006.01)i, *G01N21/17*(2006.01)n

According to International Patent Classification (IPC) or to both national classification and IPC

B. FIELDS SEARCHED

Minimum documentation searched (classification system followed by classification symbols)
G01J3/00-3/52

Documentation searched other than minimum documentation to the extent that such documents are included in the fields searched
Jitsuyo Shinan Koho        1922–1996    Jitsuyo Shinan Toroku Koho   1996–2013
Kokai Jitsuyo Shinan Koho  1971–2013    Toroku Jitsuyo Shinan Koho   1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2007-316007 A  (Yokogawa Electric Corp.),<br>06 December 2007 (06.12.2007),<br>paragraphs [0023] to [0027]; fig. 1 to 2<br>(Family: none) | 5-7<br>1-4 |
| X<br>A | JP 2007-327923 A  (Olympus Corp.),<br>20 December 2007 (20.12.2007),<br>paragraphs [0017] to [0024]<br>(Family: none) | 5-7<br>1-4 |
| A | JP 04-106430 A  (Matsushita Electric Industrial Co., Ltd.),<br>08 April 1992 (08.04.1992),<br>page 3, lower right column, line 9 to page 4, lower left column, line 7<br>(Family: none) | 1-7 |

[×] Further documents are listed in the continuation of Box C.      [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    18 July, 2013 (18.07.13) | Date of mailing of the international search report<br>    30 July, 2013 (30.07.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/068266

C (Continuation).    DOCUMENTS CONSIDERED TO BE RELEVANT

| Category* | Citation of document, with indication, where appropriate, of the relevant passages | Relevant to claim No. |
|---|---|---|
| A | JP 63-295935 A  (Otsuka Electronics Co., Ltd.), 02 December 1988 (02.12.1988), page 3, upper left column, line 13 to upper right column, line 5; fig. 5 (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011024842 A